# EUROPEAN PATENT APPLICATION

(11) **EP 4 592 968 A1**
(43) Date of publication of application: **30.07.2025**
(21) Application number: 24154046.7
(22) Date of filing: 25.01.2024
(51) Int. Cl.: G06V 10/25, G06V 10/20, G06V 10/26, G06V 10/44, G06V 10/764, G06V 10/94, G06V 20/00, G06V 20/52, G06V 20/56, G06V 20/70, G06T 7/11, G06T 7/13, G06T 7/73, G06V 20/64

(54) **METHOD OF ESTIMATION OF OBJECT SHAPE AND OBJECT POSITION BY VACUUM CLEANER**

(71) Applicant: BSH Hausgeräte GmbH, 81739 München (DE)
(72) Inventor: Tharakan, Tone John, 97070 Würzburg (DE)

(57) **Abstract**

A method of estimation of object shape and object position by a vacuum cleaner comprising a monocular camera through which following steps are performed:
- creation of an image of the environment,
- detection and recognition of objects using semantic segmentation,
- fetching of pixel information that belong to the detected object,
- extraction of pixels that belong to the edge of the object,
- calculation of a distance to a set of pixels or to all pixels that belong to an edge of the object,
- mapping estimated distances to pixels.

The present invention provides a method of estimation of object shape and object position by a vacuum cleaner which is able to adapt its behavior depending on the kind of detected object in the vacuum cleaner environment. This adaptive behavior makes the usage of the vacuum cleaner more intelligent and very attractive for the user.

## Description

The present invention relates to a method of estimation of object shape and object position by a vacuum cleaner, in particular by an autonomous vacuum cleaner, in the vacuum cleaner environment.

Vacuum cleaners are designed to clean the floor. There are different types of vacuum cleaners e.g. handheld vacuum cleaners or robot vacuum cleaners. Robot vacuum cleaners are autonomous devices which are used in a household to clean the floor automatically. The environment of the vacuum cleaner is full of objects e.g. chairs, furniture, toys, shoes etc. These objects are an obstacle for the vacuum cleaner and have to be avoided during the cleaning process. For this reason, vacuum cleaners are able to detect objects in the vacuum cleaner environment. The source of detection of obstacles could origin from LIDAR data, camera information or any other range measurement sensor. For objects that have been detected, two kinds of behavior of the vacuum cleaner can be implemented. The first behavior is to traverse towards the object and slowly bump into it and the second behavior is to avoid contact with the object and planning a way around. For that reason, an information on the type of objects within the household environment has to be provided.

The patent document US 7 155 308 B2 discloses a robot obstacle detection system including a robot housing which navigates with respect to a surface and a sensor subsystem having a defined relationship with respect to the housing and aimed at the surface for detecting the surface. The sensor subsystem includes an optical emitter which emits a directed beam having a defined field of emission and a photon detector having a defined field of view which intersects the field of emission of the emitter at a region. A circuit in communication with a detector redirects the robot when the surface does not occupy the region to avoid obstacles. A similar system is employed to detect walls.

The patent document DE 10 2011 000 536 A1 discloses a method which involves dividing a map display of an automatically movable device into sub regions by a grid. Identification numbers of each region is calculated for determining an actual position of the device at a location within the display. A number of the calculated identification numbers is compared with a number of the regions laid outside predetermined range, which exclude a current position of the device. An actual position of the corresponding region is determined by a self-localization process.

The patent document CN 1 15 185 285 A discloses an automatic obstacle avoidance method, device and equipment for a dust collection robot and a storage medium which are used for improving the obstacle avoidance sensitivity of the dust collection robot. The method comprises the following steps: inputting a regional streetscape video into a map information recognition model for environment information recognition to obtain global map information; constructing an initial cleaning path based on global map information; performing mobile cleaning from the initial cleaning point along a preset direction according to the initial cleaning path, and collecting a real-time road condition video in the mobile cleaning process; inputting the real-time road condition video into an obstacle detection model set to perform moving obstacle recognition to obtain moving obstacle information; performing ultrasonic ranging on the target moving obstacle according to the obstacle type to obtain an obstacle distance; and selecting an obstacle avoidance mode corresponding to the obstacle distance according to the obstacle distance and the obstacle type, and performing automatic obstacle avoidance on the target moving obstacle according to the obstacle avoidance mode.

It is the object of the present invention to provide a further development with an advantage over the state of the art.

This object is solved by a method of estimation of object shape and object position by a vacuum cleaner in a vacuum cleaner environment. The vacuum cleaner is equipped with a monocular camera which is able to perform following steps of the method:
- creation of an image of the environment,
- detection and recognition of objects using semantic segmentation,
- fetching of pixel information that belong to the detected object,
- extraction of pixels that belong to the edge of the object,
- calculation of a distance to a set of pixels or to all pixels that belong to an edge of the object,
- mapping estimated distances to pixels.

The image of the environment is created by a monocular camera on the basis of the video stream. The monocular camera captures visual information of the environment which is processed in the next steps of the method. The image of the environment is preferably two-dimensional and comprises a plurality of image pixels. Based on the image of the environment, a further steps of the method according the invention are performed.

After capturing the image of the environment, objects which are present in the vacuum cleaner surrounding are detected, recognized and classified using a semantic segmentation. Use of semantic segmentation is beneficial especially in case of determining edges of an irregularly shaped object such as a cable, textile or a shoe. Semantic segmentation is the task of assigning a class label to every pixel of the image. Semantic segmentation classifies a certain object in the image, finds the object and groups pixels of the object in a localized image by creating a segmentation mask in order to separate certain object from the surrounding. Essentially, the task of semantic segmentation can be referred to as classifying a certain class of image and separating it from the rest of the image classes by overlaying it with a segmentation mask. With the help of a semantic segmentation machine learning algorithm, the vacuum cleaner is trained to detect common household objects that are identified as a threat to the proper conducting of the cleaning process by the vacuum cleaner. The object detection and classification according the invention uses the monocular camera which is mounted on the vacuum cleaner at a predefined height from ground level. Once the object classification algorithm based on semantic segmentation is able to identify the object from the video stream of the camera, the vacuum cleaner will have the location and corresponding values of pixels in the image frame that belongs to the detected object. The vacuum cleaner needs to know how far the object is and also know the boundary of this object to efficiently execute the smart behaviors to avoid these objects which can be a threat to the vacuum cleaner and to its performance.

In the next step fetching of pixel information that belong to the detected object takes place. The pixel information is the pixel locations and pixels color value.

From the pixel locations obtained using semantic segmentation, pixels that aligns with the edges of the object shall be extracted. Then, the pose estimation algorithm shall be applied individually to these extracted pixels or to a selected relevant pixels from the set of extracted pixels. The results would give the distance from the vacuum cleaner to multiple points along the edges of the object. Later, these estimated distances can be mapped using appropriate mapping algorithm to determine the shape of the object.

Next step of the method is calculation of a distance to a set of pixels or to all pixels that belongs to an edge of the object. In this step, a calculation of a distance takes place. Estimation of distance to the object from the monocular camera is calculated using the horizontal and vertical field of views of the device, height of the device from the ground, resolution of the image and pixel locations. Once the distance to the object and also its boundary are known, the vacuum cleaner can efficiently execute different smart behaviors. Moreover, the behavior of the vacuum cleaner can be made more user friendly and customized by allowing the user to choose the behavior that needs to be executed when the vacuum cleaner encounters different objects on its path.

The monocular camera is attached to the vacuum cleaner parallel to the ground and the foot of the object is in the lower half of the image plane. The best performance of the distance calculation method is achieved when the monocular camera is calibrated and the object and the camera are on the same ground plane. In the method according to the invention all required information regarding the object can be retrieved using a single monocular camera alone. The positive effect is that only one monocular camera is required to perform all steps of the vacuum cleaner controlling method.

The vacuum cleaner is able to adapt its behavior in dependence of the kind of the detected object located in its surrounding. The method according the invention can be implemented in autonomous, semi-autonomous and manual cleaning devices.

The present invention provides a method of estimation of object shape and object position by a vacuum cleaner which is able to adapt its behavior depending on the kind of detected object in the vacuum cleaner environment. This adaptive behavior makes the usage of the vacuum cleaner more intelligent and very attractive for the user.

The construction of the invention, however, together with additional objects and corresponding advantages will be best understood from the following description of specific embodiments and in connection with the accompanying drawing.

In the drawing:

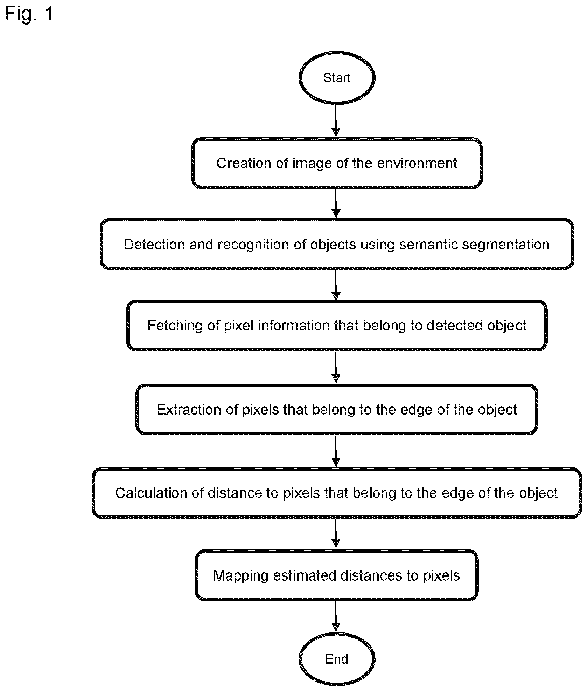

- Fig. 1: shows a flow chart showing steps of the method according the invention

In cooperation with attached drawing, the technical contents and detailed description of the present invention are described thereinafter according to a preferable embodiment being not used to limit its executing scope. Any equivalent variation and modification made according to appended claims is all covered by the claims claimed by the present invention.

Fig. 1 shows a flow chart showing steps of the method of estimation of object shape and object position by a vacuum cleaner. Following steps are performed by the monocular camera based on a video stream: creation of an image of the vacuum cleaner environment, detection and recognition of objects using semantic segmentation, fetching of pixel information that belong to detected object, extraction of pixels that belong to the edge of the object, calculation of the distance to pixels that belong to the edge of the object and mapping estimated distances to pixels. Based on the captured information an adaptive behavior of the vacuum cleaner can be implemented.

The present invention provides a method of estimation of object shape and object position by a vacuum cleaner which is able to adapt its behavior depending on the kind of detected object in the vacuum cleaner environment. This adaptive behavior makes the usage of the vacuum cleaner more intelligent and very attractive for the user.

## Claims

1. A method of estimation of object shape and object position by a vacuum cleaner comprising a monocular camera through which following steps are performed:
- creation of an image of the environment,
- detection and recognition of objects using semantic segmentation,
- fetching of pixel information that belong to the detected object,
- extraction of pixels that belong to the edge of the object,
- calculation of a distance to a set of pixels or to all pixels that belong to an edge of the object,
- mapping estimated distances to pixels.

2. The method according to claim 1, **characterized in that** the monocular camera is attached to the vacuum cleaner parallel to the ground.
